Europäisches Patentamt

**European Patent Office**

Office européen des brevets

(11) Numéro de publication: **0 122 166**
A1

# DEMANDE DE BREVET EUROPEEN

(21) Numéro de dépôt: **84400432.5**

(22) Date de dépôt: **05.03.84**

(51) Int. Cl.³: **F 17 C 9/02**

(30) Priorité: **08.03.83 FR 8303758**

(43) Date de publication de la demande: **17.10.84**
**Bulletin 84/42**

(84) Etats contractants désignés: **AT BE CH DE FR GB IT LI LU NL SE**

(71) Demandeur: **L'AIR LIQUIDE, SOCIETE ANONYME POUR L'ETUDE ET L'EXPLOITATION DES PROCEDES GEORGES CLAUDE, 75, Quai d'Orsay, F-75321 Paris Cedex 07 (FR)**

(72) Inventeur: **Brugerolle, Jean-Renaud, 9, rue des Bauches, F-75016 Paris (FR)**

(74) Mandataire: **Jacobson, Claude et al, L'AIR LIQUIDE, SOCIETE ANONYME POUR L'ETUDE ET L'EXPLOITATION DES PROCEDES GEORGES CLAUDE 75, quai d'Orsay, F-75321 Paris Cedex 07 (FR)**

(54) **Procédé et appareil pour produire un gaz à haute pureté par vaporisation d'un liquide cryogénique.**

(57) Le réservoir (1) contient à sa partie inférieure un récipient épurateur (2) qui contient leui-même un plateau à cloche (9) communiquant avec le réservoir et muni d'un déversoir (12), lequel débouche dans un bain à niveau constant. Lorsqu'on soutire du gaz du sommet de l'épurateur, du liquide prélevé dans le bain inférieur est vaporisé dans un vaporiseur extérieur (3), et le gaz produit traverse successivement les deux bains.

On peut ainsi obtenir les gaz à haute pureté, exempts de poussière, qui sont exigés pour certaines applications, notamment dans l'industrie des composants électroniques.

La présente invention est relative à un procédé pour produire un gaz à haute pureté par vaporisation d'un liquide cryogénique contenu dans un réservoir, du type dans lequel on lave au moyen dudit liquide le gaz produit par vaporisation de ce liquide.

Les gaz tels que l'azote, l'oxygène, l'argon ou l'hydrogène sont fréquemment distribués par les producteurs sous forme liquide à très basse température et stockés par les utilisateurs dans des réservoirs appelés évaporateurs. Lorsqu'une demande de gaz apparaît, du liquide est soutiré de l'évaporateur, vaporisé par un vaporiseur puis réchauffé pour être distribué gazeux à pression sensiblement constante.

Les procédés du type précité (voir par exemple le brevet FR. 2.120.475) assurent en outre une épuration par distillation du gaz produit. Cependant, dans certaines applications telles que l'industrie des semi-conducteurs, on exige une très grande pureté des gaz, et notamment une absence quasi-totale de poussières, qui ne peut être obtenue avec les procédés connus.

En effet, lorsque, comme c'est le cas dans le brevet français précité, on se contente de faire barboter dans le liquide contenu dans l'évaporateur le gaz produit par chauffage, les poussières en suspension se rassemblent en grand nombre près de la surface du liquide et se déposent sur la paroi du réservoir ; lorsque le niveau baisse, le "séchage" des parois dû aux entrées de chaleur a pour résultat que les particules solides sont de nouveau entraînées par le gaz soutiré.

L'invention a pour but de fournir un procédé permettant d'obtenir en permanence et à la demande du gaz pratiquement exempt de poussières.

A cet effet, l'invention a pour objet un procédé du type précité, caractérisé en ce qu'on fait passer ledit gaz à travers un bain de liquide à niveau constant contenu dans un récipient auxiliaire alimenté par le réservoir.

Pour pouvoir poursuivre plus longtemps le soutirage de gaz pur, de préférence, on effectue une purge du récipient auxiliaire lorsqu'une quantité prédéterminée de gaz a été soutirée. On évite ainsi de trop concentrer en particules solides le liquide traversé par le gaz.

Dans un mode préféré de mise en oeuvre de l'invention, on maintient constant ledit niveau en alimentant en liquide frais un compartiment du récipient auxiliaire qui contient ledit bain et en faisant se déverser ce bain dans un second compartiment à niveau constant contenu dans le récipient auxiliaire, ladite purge étant effectuée dans ce second compartiment. Ceci assure une élimination très efficace des poussières rassemblées à la surface du liquide laveur.

L'invention a également pour objet un appareil destiné à la mise en oeuvre d'un procédé tel que défini ci-dessus. Ce dispositif, du type comprenant un réservoir de liquide cryogénique, un vaporiseur et une masse de liquide interposée entre ce vaporiseur et une conduite de soutirage du gaz, est caractérisé en ce que ladite masse de liquide est un bain à niveau constant contenu dans un récipient auxiliaire et alimenté par le réservoir.

Il est très avantageux que le récipient auxiliaire soit disposé à l'intérieur du réservoir. En effet, l'appareil est alors particulièrement économique à réaliser, et, de plus, le liquide du réservoir assure l'isolation thermique du récipient auxiliaire et évite l'assèchement de ce dernier, même après des périodes prolongées de non-utilisation.

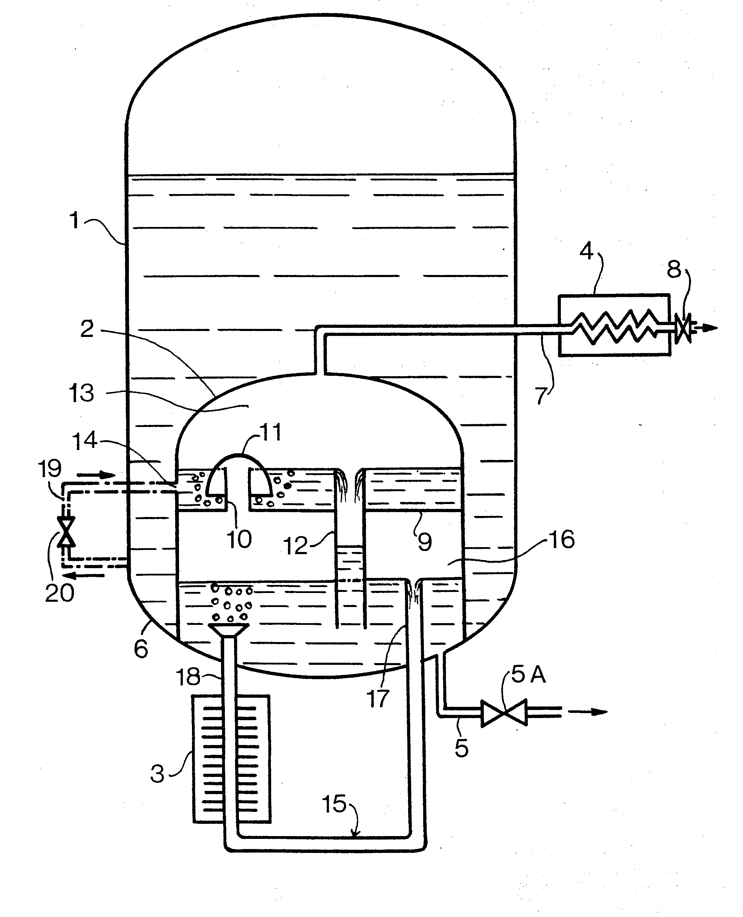

Un exemple de réalisation de l'invention va maintenant être décrit en regard du dessin annexé, sur lequel la figure unique représente schématiquement en coupe longitudinale un appareil de production de gaz à haute pureté conforme à l'invention.

L'appareil représenté au dessin comprend essentiellement un réservoir de stockage ou évaporateur 1, un récipient auxiliaire ou épurateur 2 contenu dans le réservoir, un vaporiseur 3, un réchauffeur 4 et au moins une conduite de purge 5.

Le récipient 2 a la forme d'une cloche soudée par sa base sur le fond inférieur 6 du réservoir. De son sommet part une conduite 7 de soutirage de gaz qui traverse le réchauffeur 4 à l'extérieur du réservoir 1 et est équipée d'une vanne 8.

Le récipient 2 est divisé en deux compartiments par un plateau 9 qui comporte au moins une tubulure 10 en saillie vers le haut ; cette dernière est coiffée d'une cloche fixe 11 dont le bord inférieur se trouve au dessous du bord supérieur de la tubulure 10. Le plateau 9 comporte en outre au moins une descente 12 constituée par un tube vertical qui s'étend entre le voisinage du fond 6 du réservoir et un niveau situé au-dessus du bord inférieur de la cloche 11 et au-dessous de l'extrémité supérieure de la tubulure 10. Le compartiment supérieur 13 du récipient 2 communique avec l'espace du réservoir 1 extérieur à ce récipient par l'intermédiaire d'au moins une ouverture 14 ménagée dans la paroi du récipient légèrement au-dessus du plateau 9 et au-dessous du niveau du déversoir 12.

Un tube 15 en U pénètre par ses deux branches verticales dans le compartiment inférieur 16 du récipient 2 en traversant le fond 6. Une branche 17 de ce tube s'étend vers le haut jusqu'à un niveau supérieur à celui de l'extrémité inférieure du tube de descente 12. L'autre branche 18 du tube 15 traverse le vaporiseur 3 en dehors du récipient 2 puis pénètre de nouveau par le fond 6 dans ce récipient, jusqu'à un niveau inférieur à celui de l'extrémité supérieure de la branche 17.

La conduite de purge 5 part du fond 6, à l'intérieur du récipient 2, et est équipée d'une vanne 5A.

Le fonctionnement de cet appareil est le suivant :

Le réservoir 1 est rempli d'un liquide cryogénique, et l'état d'équilibre est celui représenté en trait mixte au dessin : les vannes 8 et 5A étant fermées, les compartiments 13 et 16 contiennent du liquide jusqu'au niveau du tube 12 et de la branche 17 du tube 15 respectivement.

Lorsque l'utilisateur ouvre la vanne 8 et soutire du gaz, il provoque une diminution de pression dans le compartiment supérieur 13. Pour rétablir l'équilibre hydrostatique, du liquide pénètre dans ce compartiment par l'ouverture 14, et ce liquide déborde dans le tube 12, puis dans le tube 17. Du liquide passe ainsi dans le vaporiseur 3 et est réintroduit sous forme gazeuse dans le compartiment 16 par la branche 18 du tube 15.

Ce gaz augmente la pression dans le compartiment 16, ce qui refoule du liquide d'une part vers le haut dans le tube 12, et d'autre part vers le bas hors de la cloche 11. Dès que le liquide est descendu, dans celle-ci, jusqu'au niveau de son bord inférieur, il se produit un échappement de bulles dans le bain supérieur, et ces bulles remplacent le gaz soutiré par la conduite 7.

Cette suite de phénomènes, illustrée en trait plein au dessin, se poursuit tant que l'on soutire du gaz. Lorsqu'on ferme la vanne 8, l'équilibre se rétablit dès que la pression qui règne dans le compartiment supérieur 13 équilibre celle qui règne dans le réservoir 1. Puis, progressivement, comme le récipient 2 est isotherme, les pressions s'égalisent sensiblement dans les compartiments 13 et 16, et l'appareil revient à son état initial.

En cours de soutirage, on voit que le gaz provient de la vaporisation du liquide du bain inférieur et qu'il passe tout d'abord à travers ce bain, puis à travers le bain supérieur, en subissant ainsi deux lavages. Ces lavages éliminent d'une part les impuretés dissoutes moins volatiles par effet de distillation, et d'autre part les poussières et les autres impuretés solides, qui adhèrent au liquide par capillarité.

Le bain inférieur se charge progressivement de poussières. Lorsqu'une quantité donnée de gaz a été soutirée, on purge ce bain en ouvrant la vanne 5A, ce qui assure son renouvellement par du liquide frais pénétrant par l'ouverture 14.

Le gaz prélavé par le bain inférieur est débarrassé des poussières restantes par le bain supérieur. Ce dernier ne se charge pas en poussières, car il est constamment renouvelé à travers l'ouverture 14, et les poussières qui se rassemblent à sa surface sont éliminées par le tube déversoir 12. Ainsi, c'est un gaz de haute pureté qui parvient à la conduite 7 de soutirage.

Par suite, si, à titre de sécurité, on dispose un filtre dans la conduite de soutirage 7, ce filtre ne se colmatera que très lentement, ce qui limite d'autant les introductions d'impuretés dans le circuit consécutives aux changements de filtre.

Le fait que le récipient 2 soit disposé dans la partie inférieure du réservoir 1 est très avantageux : d'une part, la construction de l'ensemble de l'appareil est simple. D'autre part, le liquide du réservoir, qui entoure toute la cloche 2, maintient le récipient épurateur parfaitement isotherme, quelles que soient les entrées de chaleur dans le réservoir ; par suite, même après une période prolongée de non utilisation, les deux bains du récipient 2 ne risquent pas de s'assécher, et le fonctionnement de l'appareil est fiable quel que soit le débit de soutirage.

Il est à noter qu'en cas de surpression dans le compartiment 13, il se produit une condensation du gaz épuré sur le dôme supérieur du récipient 2, ce qui lave ce dernier.

De nombreuses variantes de l'appareil décrit peuvent être envisagées :

- comme illustré en traits mixtes, l'alimentation du bain supérieur peut s'effectuer par un tuyau 19 extérieur au réservoir, communiquant par une extrémité avec le compartiment 13, un peu au-dessus du plateau 9, et par l'autre extrémité avec le liquide extérieur au récipient 2. Ce tuyau 19 est muni d'un robinet 20 qui permet de régler le débit qui le traverse.

- le débit de liquide qui passe dans le vaporiseur 3 peut être réglé par un régulateur de pression disposé dans le tube 15, la branche 17 de ce dernier partant du fond 6 du récipient 2. Dans ce cas, le niveau du bain inférieur est maintenu constant par un régulateur de niveau commandant le robinet 20 précité.

- le récipient 2 peut contenir plusieurs plateaux de lavage superposés analogues au plateau 9, auquel cas le plateau supérieur est alimenté en liquide frais et chaque plateau comporte un déversoir alimentant le plateau immédiatement inférieur. Au moins l'un des plateaux inférieurs peut d'ailleurs être remplacé par un garnissage parcouru de haut en bas par le liquide et de bas en haut par le gaz. Dans chaque configuration, le premier lavage par barbotage peut être supprimé, la branche 18 du tube 15 étant alors prolongée jusqu'au dessus du niveau du bain inférieur.

- on peut prévoir dans un même réservoir plusieurs récipients épurateurs 2, ce qui permet de purger totalement l'un deux sans interrompre le fonctionnement de l'appareil. Le même résultat pourrait d'ailleurs être obtenu avec un seul récipient 2, en cloisonnant le compartiment inférieur 16.

- la vaporisation du liquide contenu dans le bain inférieur peut être obtenu par d'autres moyens que ceux décrits plus haut, par exemple par ceux décrits dans le brevet FR. 2.120.475 précité.

- la cloche fixe du plateau 9 peut être remplacée par un clapet librement mobile verticalement, qui dégage une section de passage de gaz épuré proportionnelle au débit soutiré. Dans ce cas, le déversoir 12 doit bien entendu s'élever au-dessus de l'extrémité supérieure de la tubulure 10. Tout autre type de plateau obligeant le gaz montant à traverser un bain de liquide pourrait également convenir.

REVENDICATIONS

1. - Procédé pour produire un gaz à haute pureté par vaporisation d'un liquide cryogénique contenu dans un réservoir (1), du type dans lequel on lave au moyen dudit liquide le gaz produit par vaporisation de ce liquide, caractérisé en ce qu'on fait passer ledit gaz à travers un bain de liquide à niveau constant contenu dans un récipient auxiliaire (2) et alimenté par le réservoir.

2. - Procédé suivant la revendication 1, caractérisé en ce qu'on effectue une purge du récipient auxiliaire (2) lorsqu'une quantité prédéterminée de gaz a été soutirée.

3. - Procédé suivant la revendication 2, caractérisé en ce qu'on maintient constant ledit niveau en alimentant en liquide frais un compartiment (13) du récipient auxiliaire (2) qui contient ledit bain et en faisant se déverser ce bain dans un second compartiment à niveau constant contenu dans le récipient auxiliaire, ladite purge étant effectuée dans ce second compartiment.

4.- Procédé suivant la revendication 3, caractérisé en ce qu'on effectue au moins un lavage supplémentaire du gaz par le liquide entre les deux compartiments à niveau constant.

5. - Appareil pour la mise en oeuvre d'un procédé suivant l'une quelconque des revendications 1 à 4, du type comprenant un réservoir (1) de liquide cryogénique, un vaporiseur (3) et une masse de liquide interposée entre ce vaporiseur et une conduite (7) de soutirage du gaz, caractérisé en ce que ladite masse de liquide est un bain à niveau constant contenu dans un récipient auxiliaire (2) et alimenté par le réservoir.

6. - Appareil suivant la revendication 5, caractérisé en ce que le récipient auxiliaire (2) est pourvu d'au moins une conduite de purge (5).

7. - Appareil suivant la revendication 6, caractérisé en ce que ledit bain est contenu dans un compartiment (13) du récipient auxiliaire (2) comportant un déversoir (12) qui alimente un second compartiment à liquide à niveau constant (13) dudit récipient, ce second compartiment étant pourvu de ladite conduite de purge (5).

8. - Appareil suivant la revendication 7, caractérisé en ce que le vaporiseur (3) est agencé pour produire du gaz dans le liquide contenu dans ledit second compartiment (16), et en ce que ledit premier compartiment (13) est défini par un plateau à cloche (9) ou analogue.

9. - Appareil suivant l'une des revendications 7 et 8, caractérisé en ce que le récipient auxiliaire (2) contient au moins un dispositif de lavage supplémentaire interposé entre lesdits premier et second compartiments (13, 16).

10. - Appareil suivant l'une quelconque des revendications 5 à 9, caractérisé en ce que le récipient auxiliaire (2) est disposé à l'intérieur du réservoir (1).

0122166

Office européen
des brevets

**RAPPORT DE RECHERCHE EUROPEENNE**

Numéro de la demande

EP   84 40 0432

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | US-A-2 972 235 (B.D. SMITH) <br> * Colonne 1; lignes 15-20; colonne 1, ligne 46 - colonne 2, ligne 55; figures 1,2 * | 2,6 | F 17 C   9/02 |
| A | US-A-2 208 661 (C.J. CHRISTENSEN) | | |
| A | GB-A- 142 477 (G. NAUERZ) <br><br> * Page 1, lignes 9-38; page 1, ligne 64 - page 2, ligne 24; figure 1 * | 3,4,7, 9 | |
| D,A | FR-A-2 120 475 (L'AIR LIQUIDE) | 1 | |

DOMAINES TECHNIQUES
RECHERCHES (Int. Cl. ³)

B 01 D
C 01 B
F 17 C
F 25 J

Le présent rapport de recherche a été établi pour toutes les revendications

| Lieu de la recherche <br> LA HAYE | Date d'achèvement de la recherche <br> 12-06-1984 | Examinateur <br> SIEM T.D. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82